# EUROPÄISCHE PATENTSCHRIFT

(11) **EP 1 547 661 B1**
(45) Veröffentlichungstag und Bekanntmachung des Hinweises auf die Patenterteilung: **03.03.2010**
(21) Anmeldenummer: 04106731.5
(22) Anmeldetag: 20.12.2004
(51) Int. Cl.: B01D 33/073, B01D 33/46, B01D 39/20

(54) **Filteranlage**
Filter assembly
Ensemble filtrant

(30) Priorität: 23.12.2003 DE 10361570
(43) Veröffentlichungstag der Anmeldung: 29.06.2005
(73) Patentinhaber: MANN+HUMMEL GmbH, 71638 Ludwigsburg (DE)
(72) Erfinder: Tudyka, Stefan, Dr., 86356 Neusäss (DE); Hartmann, Uwe, Dr., 71711 Steinheim (DE); Wink, Peter, 69123 Heidelberg (DE)

(56) Entgegenhaltungen:
- EP-A- 0 372 351
- EP-A- 0 500 232
- WO-A-02/07478
- DE-A1- 10 122 095

## Beschreibung

Die Erfindung bezieht sich auf eine Filteranlage mit einem Filterelement gemäß dem Oberbegriff des Anspruches 1.

Aus der Offenlegungsschrift EP 0 372 351 A1 ist ein Verfahren zur Herstellung keramischer Filterelemente, Plattenfilter, Membranfilter oder Filterrohre bekannt, bei welchem zunächst ein poröser keramischer Stützkörper hergestellt wird und nach dessen Sinterung mindestens eine Folie ais keramischen sinterfähiem Pulver und temporärem Binder darauf angeordnet und anschließend mittels Sintern verbunden wird.

Aus der Offenlegungsschrift EP 0 500 232 A1 ist eine Filterreinigungsmethode bekannt, bei welcher eine Filterkuchenschicht mit einem Abstreifer von einer Filtertrommel entfernt wird, auch wenn die zu entfernenden Partikel fein sind.

Aus der Druckschrift DE 202 18 590 U1 ist eine als Zyklonabscheider ausgeführte Rotationsfilteranlage bekannt, welche in einem Behälter ein zylindrisches Filterelement aufweist, dessen Mantelfläche von außen von dem in den Behälter eingeführten, verunreinigten Fluid radial angeströmt wird, wobei das gereinigte Fluid über eine Auslassöffnung im Boden des Filterelementes ausgeleitet wird. Die ausgefilterten Partikel sammeln sich auf der Außenseite der Mantelfläche des Filterelementes an und können bei einer Rotation des Filterelementes mithilfe von die Mantelfläche beaufschlagenden Abstreifern entfernt werden. Auf diese Weise kann der sich auf der Mantelfläche ansammelnde Filterkuchen zur Abreinigung des Filterelementes abgestreift werden.

Das Filterelement umfasst einen als Lochblechträger ausgeführten Stützträger, welcher großflächige Ausnehmungen für den Durchtritt des zu reinigenden Fluids aufweist. Auf den Stützträger ist eine perforierte Folie mit schlitzförmigen Öffnungen aufgebracht, welche wesentlich kleiner ausgeführt sind als die Ausnehmungen im Stützkörper. Durch diese Kombination von perforierter Folie mit kleinen Öffnungen und Lochblechträger mit großen Ausnehmungen wird einerseits eine ausreichende Stabilität für die Folie erzielt, andererseits bietet der Stützträger einen nur geringen Strömungswiderstand für das durchtretende Fluid, wodurch der für eine wirksame Filtration erforderliche Differenzdruck niedrig gehalten werden kann.

Von diesem Stand der Technik ausgehend liegt der Erfindung das Problem zugrunde, eine Filteranlage mit einem rotationssymmetrischen Filterelement zu schaffen, die sich durch eine hohe Filtrationsleistung und zugleich durch eine leichte Reinigungsmöglichkeit des eingesetzten Filterelementes auszeichnet.

Dieses Problem wird erfindungsgemäß mit den Merkmalen des Anspruches 1 gelöst. Die Unteransprüche geben zweckmäßige Weiterbildungen an.

Erfindungsgemäß weist das Filterelement eine perforierte Folie auf, welche als Keramikfolie ausgeführt ist. Die Keramikfolie besitzt Poren, deren Größe die Durchlässigkeit der Keramikfolie für das zu filtrierende Fluid bestimmen. Die Keramikfolie weist sich durch eine hohe Haltbarkeit aus, zudem kann die Keramikfolie aufgrund ihrer verhältnismäßig reibungsarmen, glatten Oberfläche sehr gut gereinigt werden, wodurch die Wartungsintervalle gesteigert werden und insgesamt die Reinigungsleistung verbessert wird. Eine regelmäßige Abreinigung der Keramikfolie kann mit einem verhältnismäßig geringen Aufwand durchgeführt werden, wodurch auch die mechanische Belastung der Keramikfolie herabgesetzt wird.

Das Filterelement ist erfindungsgemäß zylindrisch ausgeführt, wobei unter diesen Begriff auch nicht-rotationssymmetrische Querschnittsformen fallen sollen, beispielsweise mehreckige, polygonale oder ovale bzw. elliptische Querschnittsformen.

Zweckmäßig werden jedoch rotationssymmetrische Querschnittsformen eingesetzt, also hohlzylindrische Körper mit kreisrundem Querschnitt. In dieser Ausführung kann das Filterelement auch in Rotationsfilteranlagen eingesetzt werden, in welchen die Längs- bzw. Symmetrieachse des Filterelementes zugleich eine Rotationsachse bildet, um die das Filterelement und/oder ein Abstreifer drehbar gelagert sind, welcher dazu dient, einen sich auf der Rohseite des Filterelementes anlagernden Filterkuchen bei einer Rotation eines der beiden Bauteile oder beider Bauteile abzustreifen.

Der Abstreifer weist erfindungsgemäß Abstreifflügel auf, welche mit einem geringen Abstand zur Mantelfläche angeordnet sind.

Als Keramikmaterial kommt beispielsweise Aluminiumoxid, Zirkonoxid, Siliziumkarbid oder Siliziumoxid in Betracht, gegebenenfalls auch sonstige anorganische Materialien.

In einer ersten zweckmäßigen Ausführung ist die Keramikfolie auf einen Stützkörper aufgebracht, in den Öffnungen eingebracht sind, die vorteilhaft größer sind als die Poren in der Keramikfolie. Der Stützkörper kann grundsätzlich aus dem gleichen Material wie die Keramikfolie bestehen, gegebenenfalls aber auch aus einem anderen Material als die Keramikfolie gefertigt sein, beispielsweise aus Metall. Es ist insbesondere auch möglich, herkömmliche zylindrische Metallfilter als Stützkörper einzusetzen und auf die Mantelfläche derartiger Metallfilter eine Keramikfolie aufzubringen. Gegebenenfalls kann die Porengröße in der Keramikfolie auf die Größe der Öffnungen bzw. Ausnehmungen im Stützkörper angepasst werden, insbesondere in der Weise, dass bei einer teilweisen Überdeckung zwischen den Öffnungen im Stützkörper und den Poren in der Keramikfolie eine weitere Reduzierung der Größe der effektiven Ausnehmungen im Filterelement erzielt wird.

Gemäß einer zweiten vorteilhaften Ausführung ist die Keramikfolie selbsttragend ausgebildet. In diesem Fall besitzt die Keramikfolie eine ausreichend hohe Wandstärke, die sie dazu befähigt, die im laufenden Filtrationsbetrieb auftretenden Belastungen und Kräfte auch ohne einen Stützkörper aufzunehmen. Da auf den Stützkörper in dieser Ausführung verzichtet werden kann, wird eine erhebliche konstruktive Vereinfachung erzielt.

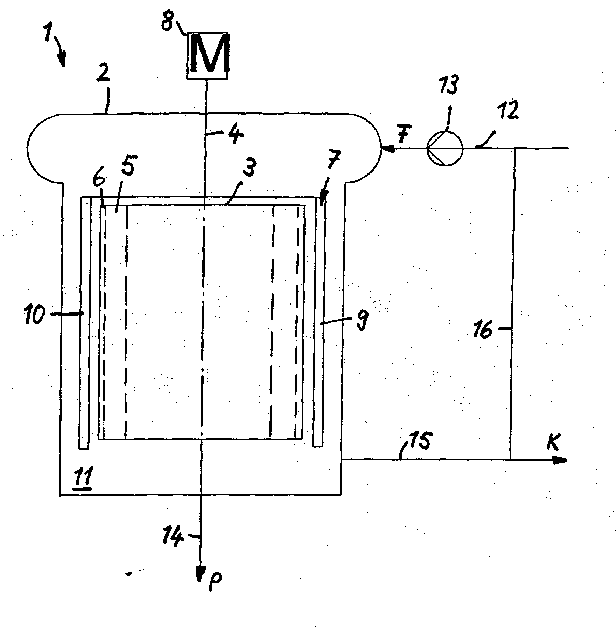

Weitere Vorteile und zweckmäßige Ausführungen sind den weiteren Ansprüchen, der Figurenbeschreibung und der Zeichnung zu entnehmen, in der eine Rotationsfilteranlage mit einem zylindrischen Filterelement dargestellt ist, welches einen Stützkörper und eine auf den Stützkörper aufgebrachte Keramikfolie umfasst.

Die Filteranlage 1 ist als Rotationsfilteranlage bzw. als Zyklonabscheider ausgebildet und umfasst in einem näherungsweise zylindrischen Filterbehälter 2 ein zu durchströmendes Filterelement 3, das zylindrisch ausgebildet ist, wobei die Längsachse 4 des Filterelementes 3 mit der Längsachse des Filterbehälters 2 zusammenfällt. Das Filterelement 3 besteht aus einem hohlzylindrischen Stützkörper 5, welcher insbesondere als Metall-Hohlzylinder ausgeführt ist, sowie aus einer Keramikfolie 6, welche auf die Außenseite der zylindrischen Mantelfläche des Stützkörpers 5 aufgebracht und für die Filterwirkung verantwortlich ist. Das Filterelement 3 wird radial von außen nach innen angeströmt; dementsprechend bildet die radiale Außenseite die Rohseite und der hohlzylindrische Innenraum die Reinseite des Filterelementes 3.

Des Weiteren ist ein Abstreifer 7 vorgesehen, der Abstreifflügel 9 und 10 besitzt, welche auf der Außenseite des Filterelementes liegen und zur Abstreifung eines sich auf der Rohseite des Filterelementes anlagernden Filterkuchens dienen. Die Abstreifflügel erstrecken sich parallel zur Längsachse 4 über die Länge des Filterelementes 3. Zweckmäßig sind über den Umfang verteilt eine Mehrzahl von Abstreifflügeln vorgesehen, die vorteilhaft die Mantelfläche des Filterelementes 3 berühren oder zumindest mit einem nur geringen Abstand zur Mantelfläche angeordnet sind.

Über einen Antriebsmotor 8 können entweder das Filterelement 3 oder der Abstreifer 7 oder gegebenenfalls auch beide Bauteile angetrieben und in eine Rotation um die Längsachse 4 versetzt werden, die zugleich die Rotationsachse bildet. Eine Rotation des Filterelementes 3 um die Längsachse 4 bietet auch unabhängig von der Abstreifwirkung, welche mittels des Abstreifers 7 erzielt wird, den Vorteil, dass auszusondernde Stoffe in dem zu reinigenden Fluid aufgrund von Zentrifugalkräften nach außen geschleudert werden und an der Innenwandung des Filterbehälters 2 nach unten absinken können, wo im Bereich des Bodens des Filterbehälters 2 ein Auffangraum 11 für auszusondernde Stoffe gebildet ist.

Über eine Zulaufleitung 12 ist dem Filterbehälter 2 das zu reinigende Fluid F - das Feed - zuzuführen. In der Zulaufleitung 12 befindet sich eine Förderpumpe 13, welche das Fluid mit einem Förderdruck beaufschlagt. Die Zulaufleitung 12 mündet in einen oberen Abschnitt mit erweitertem Radius in den Filterbehälter 2. Das eingeleitete Fluid strömt von dort über die Rohseite des Filterelementes 3 radial von außen nach innen durch die Keramikfolie 6 sowie den die Keramikfolie 6 tragenden Stützkörper 5 in den Innenraum des Filterelementes, welcher die Reinseite bildet. Aus dem Filterelement-Innenraum wird das gereinigte Fluid - das Permeat P - über eine Reinseiten-Ablaufleitung 14 aus dem Filterbehälter 2 abgeleitet, wobei die Reinseiten-Ablaufleitung 14 vom Boden des Filterelementes 3 abzweigt. Das auf der Rohseite befindliche, ungereinigte Fluid wird als Konzentrat K über eine Rohseiten-Ablaufleitung 15 ausgeleitet, welche unmittelbar vom Filterbehälter 2 im Bereich des Bodens des Filterbehälters abzweigt.

Schließlich ist ein Bypass 16 vorgesehen, welcher die Zulaufleitung 12 und die Rohseiten-Ablaufleitung 15 unmittelbar und unter Umgehung des Filterelementes verbindet. Der Bypass 16 liegt außerhalb des Filterbehälters 2.

Die Poren der Keramikfolie 6 besitzen zweckmäßig eine Porengröße, welche nicht größer ist als 5 µm. Der Stützkörper 5 ist vorteilhaft als Metall-Hohlzylinder ausgebildet und besitzt Öffnungen, welche üblicherweise deutlich größer sind als die Poren in der Keramikfolie.

Gegebenenfalls kann auf einen Stützkörper 5 verzichtet werden, sofern die Keramikfolie 6 selbsttragend ausgeführt ist und eine ausreichende Formstabilität besitzt.

## Patentansprüche

1. Filteranlage, mit einem in einem Filterbehälter (2) angeordneten zylindrischen Filterelement (3), das radial zu seiner Längsachse (4) vom zu reinigenden Fluid anströmbar ist, wobei die Rohseite des Filterelements (3) mit einem Einlass für das Fluid und die Reinseite mit einem Auslass für das filtrierte Fluid in Strömungsverbindung steht, wobei dem Filterelement (3) eine die Mantelfläche des Filterelements (3) bildende Folie mit Durchlässen zugeordnet ist, wobei die Filteranlage (1) als Rotationsfilteranlage ausgebildet ist und die Längsachse (4) die Rotationsachse bildet, wobei ein die Rohseite des Filterelements (3) beaufschlagender Abstreifer (7) vorgesehen ist und der Abstreifer (7) um die Rotationsachse drehbar gelagert ist,
**dadurch gekennzeichnet,**
**dass** die Folie als mit Poren versehene Keramikfolie (6) ausgeführt ist, wobei der Abstreifer (7) Abstreifflügel (9,10) aufweist und die Abstreifflügel (9,10) mit einem geringen Abstand zur Mantelfläche angeordnet sind.

2. Filteranlage nach Anspruch 1,
**dadurch gekennzeichnet,**
**dass** die Poren der Keramikfolie (6) eine Porengröße kleiner als 5 µm aufweisen.

3. Filteranlage nach Anspruch 1 oder 2,
**dadurch gekennzeichnet,**
**dass** die Keramikfolie (6) auf einen Stützkörper (5) mit Öffnungen aufgebracht ist.

4. Filteranlage nach Anspruch 3,
**dadurch gekennzeichnet,**
**dass** der Stützkörper (5) als Metall-Hohlzylinder ausgeführt ist.

5. Filteranlage nach Anspruch 3 oder 4,
**dadurch gekennzeichnet,**
**dass** die Poren im Stützkörper (5) größer sind als die Poren in der Keramikfolie (6).

6. Filteranlage nach einem der Ansprüche 1 bis 5,
**dadurch gekennzeichnet,**
**dass** die Keramikfolie (6) selbsttragend ausgeführt ist.

7. Filteranlage nach einem der Ansprüche 1 bis 6,
**dadurch gekennzeichnet,**
**dass** das Filterelement (3) bzw. die Keramikfolie (6) rotationssymmetrisch ausgebildet ist.

## Claims

1. Filter unit, with a cylindrical filter element (3) disposed in a filter casing (2) to which the fluid to be cleaned flows radially to its longitudinal axis (4), the raw side of the filter element (3) being in flow-through connection with an intake for the fluid and the clean side with an outlet for the filtered fluid, a foil with openings forming the outside surface of the filter element (3) being allocated to the filter element (3), the filter unit (1) being designed as rotational filter unit and the longitudinal axis (4) forming the rotational axis, a wiper (7) having an impact on the raw side of the filter element (3) is provided and the wiper (7) being rotatably supported around the rotational axis, **characterized in that** the foil is designed as ceramic sheet (6) with pores, the wiper (7) featuring wiper blades (9, 10) and the wiper blades (9, 10) being located with a small distance in relation to the outside surface.

2. Filter unit according to claim 1, **characterized in that** the pores of the ceramic sheet (6) feature a pore size smaller than 5 µm.

3. Filter unit according to claim 1 or 2, **characterized in that** the ceramic sheet (6) is applied to a supporting element (5) with openings.

4. Filter unit according to claim 3, **characterized in that** the supporting element (5) is designed as metallic hollow cylinder.

5. Filter unit according to claim 3 or 4, **characterized in that** the pores in the supporting element (5) are larger than the pores in the ceramic sheet (6).

6. Filter unit according to one of the claims 1 to 5, **characterized in that** the ceramic sheet (6) is of self-supporting design.

7. Filter unit according to one of the claims 1 to 6, **characterized in that** the filter element (3) and/or the ceramic sheet (6) is rotationally symmetric.

## Revendications

1. Installation de filtration, avec un élément filtrant (3) cylindrique disposé dans un boîtier de filtre (2) pouvant être traversé par le flux de fluide à nettoyer en sens radial par rapport à son axe longitudinal (4), le côté non filtré de l'élément filtrant (3) doté d' une entrée pour le fluide étant en liaison de flux avec le côté filtré doté d'une sortie pour le fluide filtré, un film pourvu d'éléments de passage et formant la surface latérale de l'élément filtrant (3) étant affecté à l'élément filtrant (3), l'installation de filtration (1) étant réalisée comme installation de filtration par rotation et l' axe longitudinal (4) formant l'axe de rotation, une racle (7) alimentant le côté brut de l'élément filtrant (3) étant prévue et la racle (7) étant mobile autour de l'axe de rotation, **caractérisé en ce que** le film est réalisé comme film céramique (6) pourvu de pores, la racle (7) présentant des ailettes de raclage (9, 10) et les ailettes de raclage (9, 10) étant disposées à une petite distance de la surface latérale.

2. Installation de filtration selon la revendication 1, **caractérisé en ce que** les pores du film céramique (6) présentent une taille de pore inférieure à 5 p m.

3. Installation de filtration selon la revendication 1 ou 2, **caractérisé en ce que** le film céramique (6) est monté sur un élément support (5) doté d'orifices.

4. Installation de filtration selon la revendication 3, **caractérisé en ce que** l'élément support (5) est réalisé comme cylindre creux en métal.

5. Installation de filtration selon la revendication 3 ou 4, **caractérisé en ce que** les pores dans l'élément support (5) sont plus grandes que les pores dans le film céramique (6).

6. Installation de filtration selon l'une des revendications 1 à 5, **caractérisé en ce que** le film céramique (6) est réalisé de manière autoporteuse.

7. Installation de filtration selon l'une des revendications 1 à 6, **caractérisé en ce que** respectivement l'élément filtrant (3) ou le film céramique (6) est réalisé en rotation symétrique.
